# EUROPÄISCHE PATENTSCHRIFT

(11) **EP 3 082 174 B1**
(45) Veröffentlichungstag und Bekanntmachung des Hinweises auf die Patenterteilung: **08.07.2020**
(21) Anmeldenummer: 16000789.4
(22) Anmeldetag: 07.04.2016
(51) Int. Cl.: H01M 2/10, H01M 2/20

(54) **ENERGIESPEICHERVORRICHTUNG UND ZELLHALTER FÜR EINE ENERGIESPEICHERVORRICHTUNG**
ENERGY STORAGE DEVICE AND CELL HOLDER FOR AN ENERGY STORAGE DEVICE
DISPOSITIF D'ACCUMULATION D'ENERGIE ET SUPPORT D'ELEMENT POUR UN DISPOSITIF D'ACCUMULATION D'ENERGIE

(30) Priorität: 14.04.2015 DE 102015004815; 11.09.2015 DE 102015011898
(43) Veröffentlichungstag der Anmeldung: 19.10.2016
(73) Patentinhaber: EsprlTschmiede GbR, 01067 Dresden (DE)
(72) Erfinder: Prengel, Sebastian, 01067 Dresden (DE)
(74) Vertreter: Petermann, Markus Alexander

(56) Entgegenhaltungen:
- WO-A1-2014/125807
- DE-A1-102013 100 545
- JP-A- 2011 243 426
- US-A1- 2013 122 341

## Beschreibung

Die Erfindung betrifft eine Energiespeichervorrichtung, bei welcher in wenigstens zwei Packebenen eine Mehrzahl von Energiespeicherzellen zwischen einem ersten und einem zweiten Zellhalter angeordnet ist.

Für viele Anwendungen von Energiespeichervorrichtungen - wie beispielsweise in der Elektromobilität bei Fahrzeugen mit elektrischer Antriebskomponente oder im stationären Betrieb für einen "remote energy supply" - hat sich die Erkenntnis durchgesetzt, dass es insbesondere wirtschaftlich effizienter ist, die Energiespeichereinrichtung aus einer Mehrzahl standardisierter Energiespeicherzellen im Sinne eines "tailored assembly" anwendungsspezifisch zusammenzustellen. Aufgrund der hohen realisierbaren Stückzahl bei standardisierten Energiespeicherzellen sind solche Lösungen tendenziell kostengünstiger als der Einsatz anwendungsspezifisch angepasster Energiespeicherzellen.

Die für eine gewünschte Anwendung notwendige Spannung bzw. Batteriekapazität kann dann durch eine entsprechende Anordnung, beispielsweise in mehreren Packebenen, und eine geeignete elektrische Verschaltung der Energiezellen wie gewünscht eingestellt werden.

In der Regel werden hierfür aus Einzelzellen Module gebaut und diese anschließend zusammengeschaltet. Die mechanische Fixierung der Zellen im Modul erfolgt meist durch ein Gehäuse. Die Module aus mehreren fixierten Zellen werden dann in einem weiteren Gehäuse fixiert.

Aus der deutschen Patentanmeldung DE 10 2011 119 253 ist eine Energiespeichervorrichtung mit mehreren Packebenen aus mehreren achsparallelen Zellen bekannt, wobei die mechanische und elektrische Verbindung der Zellen in den einzelnen Packebenen mit einer in den Zellzwischenräumen angeordneten Stift-Buchse-Verbindung realisiert wird.

Aus Patentdokument US 2013/0122341 A1 ist eine Batterie mit Batteriezellen in mehreren Segmenten und zwischen den Segmenten angeordneten Haltern bekannt, wobei die Halter mittels Montagestangen verbunden sind.

Aus Patentdokument JP 2011 243426 A ist ein Batteriepack bekannt, bei dem innerhalb eines Gehäuses jeweils mehrere Batterieblocks auf mehreren Batterieblockebenen angeordnet sind, durch die sich eine Durchgangsschraube erstreckt.

Aus Patentdokument US 2016/006006 A1 ist ein Batteriemodul mit einer Mehrzahl von Batterieblocks bekannt, wobei die Batterieblocks zwischen elektrisch isolierenden Abdeckelementen angeordnet sind. Die Abdeckelemente sind mittels Befestigungselementen miteinander verbunden.

Aus der DE 10 2013 100 545 A1 ist eine Akkumulatoreinheit, insbesondere für ein Wasserfahrzeug, mit mehreren Akkumulatoren die über eine Halteanordnung miteinander zu einer Akkumulatorzelle verbunden sind, bekannt.

Ein Nachteil der aus Standard-Energiespeicherzellen konfektionierten Energiespeichervorrichtungen ist gegenüber solchen mit anwendungsspezifisch geformten Energiespeichern, dass sie nur durch ein aufwendiges, starres und vor allem Bauraum einnehmendes Gehäuse ausreichend verformungssteif ausgebildet werden können, um in Bauraum-begrenzten Anwendungsfeldern wie beispielsweise in Fahrzeugen mit elektrischen Antriebskomponenten eingesetzt zu werden.

Es ist daher eine Aufgabe der Erfindung, eine verformungssteife Energiespeichervorrichtung mit einer hohen Energiedichte zur Verfügung zu stellen.

Diese Aufgabe wird erfindungsgemäß gelöst durch eine Energiespeichervorrichtung, bei welcher, insbesondere in mehreren Zellstapeln, in wenigstens zwei Packebenen jeweils eine Mehrzahl von Energiespeicherzellen zwischen wenigstens einem ersten Zellhalter und wenigstens einem zweiten Zellhalter der jeweiligen Packebene angeordnet sind, wobei wenigstens eine der Energiespeicherzellen einer der Packebenen mittels wenigstens eines Kontaktelements, das zwischen den einander zugewandten Zellhaltern der benachbarten Packebenen angeordnet ist, mit einer korrespondierenden Energiespeicherzelle wenigstens einer benachbarten Packebene elektrisch zu einem Zellstapel, verbunden ist. Vorzugsweise sind mehrere, insbesondere alle Energiespeicherzellen einer der Packebenen mit jeweils einer korrespondierenden Energiespeicherzelle der benachbarten Packebene elektrisch verbunden, sodass mehrere Zellstapel ausgebildet werden. Die Energiespeichervorrichtung weist oberhalb und/oder unterhalb der Zellstapel eine, insbesondere elektrisch nicht leitende, Abschlussplatte auf, die beispielsweise mit einer vorzugsweise makroskopisch starren bzw. steifen Faserverbundwerkstoff-Platte ausgebildet ist. Die Abschlussplatte kann aber auch ein elektrisch leitendes Material aufweisen und von den Batteriezellen elektrisch isoliert sein. In einer weiteren Bauweise kann die Abschlussplatte auch in den letzten Zellhalter integriert sein.

Erfindungsgemäß weisen, insbesondere die ersten und die zweiten, Zellhalter der wenigstens zwei Packebenen jeweils wenigstens eine, insbesondere zwei oder mehrere, durchgängige Befestigungsausnehmungen auf, von denen wenigstens ein Teil, insbesondere eine, zwei, einige oder alle, weiter von einer nächstliegenden äußeren Begrenzung der Energiespeichervorrichtung entfernt angeordnet sind als wenigstens eine Energiespeicherzelle. Durch diese Befestigungsausnehmungen hindurch erstreckt sich jeweils ein unter Zug stehendes Befestigungsmittel, mittels welchem wenigstens die Energiespeicherzellen des wenigstens einen Zellstapels, insbesondere alle korrespondierenden Zellpaare oder/oder Zellstapel der beiden Packebenen, zusammengespannt sind, wobei eine Zugkraft der Befestigungsmittel wenigstens mittelbar mittels der oberen und/oder unteren Abschlussplatte, an welcher die Befestigungsmittel festgelegt sind, auf die Zellstapel aufgebracht ist.

Vorzugsweise bilden jeweils eine Befestigungsausnehmung eines ersten und eines zweiten Zellhalters, sowohl einer ersten Packebene als auch einer benachbarten, zweiten Packebene, gemeinsam einen Befestigungsgang aus, durch den sich das Befestigungsmittel erstreckt.

Die Erfindung beruht auf dem Grundgedanken, auf übereinander angeordneten Energiespeicherzellen benachbarter Packebenen der Energiespeichervorrichtung mittels dem unter Zug stehenden Befestigungsmittel eine Druckkraft aufzubringen, die die elektrische Verbindung der zugewandten Pole dieser Energiespeicherzellen, insbesondere über ein Kontaktelement, sicherstellt. Durch die Festlegung der Befestigungsmittel an den Abschlussplatten und die gleichzeitige Anordnung mehrerer Befestigungsmittel entfernt vom Rand der Packebenen können die Zugkräfte der Befestigungsmittel gleichmäßig auf die Fläche der Abschlussplatten verteilt werden, was eine gleichmäßige Druckkraft-Beaufschlagung der verschiedenen Zellstapel ermöglicht.

Die Notwendigkeit, klassische "Module" zu verbauen, bei welchen eine kleine Anzahl von Energiespeicherzellen in eine Kunststoffhülle geschrumpft wird und häufig zudem die einzelnen Energiespeicherzellen aneinander gecrimpt, gelötet oder geschweißt sind, entfällt damit. Eine Energiespeichervorrichtung im Sinne der Erfindung kann dadurch aus einem oder mehreren Zellstapeln aufgebaut sein, und eine wesentlich höhere Energiedichte aufweisen, als Energiespeichervorrichtungen mit vorkonfektionierten Modulen, insbesondere weil die Gehäuse der einzelnen Module wegfallen.

Ein weiterer Vorteil einer Energiespeichervorrichtung im Sinne der Erfindung ist, dass sie in den Kraftfluss ihrer Einbauumgebung mit einbezogen werden kann, wobei die entsprechenden Kräfte nicht ausschließlich durch ein äußeres Gehäuse der Energiespeichervorrichtung, sondern vielmehr auch durch die verspannten Zellstapel übertragen werden können. Denn indem die Energiespeicherzellen jeweils zwischen zwei Zellhaltern in ihrer Packebene angeordnet sind (also in den Zellhaltern aufgenommen sind) und zusätzlich zu einem Zellstapel verspannt, können bis zu einem bestimmten Maße Kräfte und/oder Momente aus der Einbau-Umgebung durch die Energiespeichervorrichtung hindurch übertragen werden. Limitiert sind die übertragbaren Druckkräfte insbesondere durch die Druckkraft, die eine einzelne Zelle aufnehmen kann. Sind - wie beispielsweise vorgesehen - Zellen vom Typ 18650 verbaut, beträgt die übertragbare Druckkraft nach orientierenden Messungen ca. 1 kN pro Zelle.

So könnte beispielsweise bei einer Verwendung der Energiespeichervorrichtung als Fahrrad-Akku dieser in einem Sattelrohr des Fahrrads verbaut werden, und dort Kräfte aufnehmen, wodurch der Rahmen kleiner dimensioniert werden könnte. Auch in Hybrid- und/oder Elektro-Automobilen ist eine entsprechende Integration der Energiespeichervorrichtung in kraftführende Träger vorgesehen.

In verschiedenen Ausführungen kann auch eine Energiespeicherzelle mit mehr als zwei Packebenen und/oder mehr als einem ersten und/oder zweiten Zellhalter in wenigstens einer der Packebenen vorgegeben sein.

Um ein möglichst einfaches Aufbringen der Druckkraft auf den Zellstapel sicherzustellen und/oder um die Montage des Befestigungsmittels zu erleichtern, ist gemäß einer Ausführung der

Befestigungsgang entlang einer gemeinsamen Längsachse jeweils einer der Befestigungsausnehmungen der ersten und der zweiten Zellhalter ausgebildet, insbesondere durch alle Packebenen des Zellstapels hindurch. In dieser Ausführung können in einfacher Art und Weise gerade Zugstreben als Befestigungsmittel verwendet werden. Alternativ kann vorgesehen sein, die Befestigungsausnehmungen und den Befestigungsgang aufeinander abgestimmt mit einer Krümmung auszubilden, was in entsprechenden Einbau-Umgebungen, beispielsweise einem Fahrradrahmen vorteilhaft ist. In einem solchen Fall würde dann vorzugsweise ein Zugseil als Befestigungsmittel verwendet werden.

Um die Einbindung der Energiespeichervorrichtung in einen Kraftfluss der Einbau-Umgebung zu optimieren, ist der Befestigungsgang durch die wenigstens zwei Packebenen hindurch ausgebildet, insbesondere durch alle Packebenen des Zellstapels hindurch.

Damit das unter Zug stehende Befestigungsmittel, insbesondere mehrere unter Zug stehende Befestigungsmittel, eine Druckkraft an den oder die Zellstapel übertragen kann, müssen Befestigungsmittel und Zellstapel miteinander zur Kraftübertragung verbunden sein. Um dies sicherzustellen, weist die Energiespeichervorrichtung an einem äußeren Zellhalter einer ersten Packebene und/oder einer letzten Packebene, insbesondere eines oder aller Zellstapel, jeweils eine Abschlussplatte auf, an welcher das Befestigungsmittel festgelegt und/oder umgelegt ist. Die Abschlussplatte drückt dann durch die Zugkraft des Befestigungsmittels mittelbar oder unmittelbar auf die angrenzende Energiespeicherzelle oder den zugehörigen äußeren Zellhalter der äußersten Packebene.

Trotzdem gemäß dieser Ausführung eine Abschlussplatte vorgesehen ist, muss eine einfache elektrische Kontaktierung der Energiespeicherzellen von außerhalb der Energiespeichervorrichtung möglich sein. Dazu weist die Abschlussplatte vorzugsweise wenigstens eine Ausnehmung für das wenigstens eine Befestigungsmittel und/oder wenigstens eine Ausnehmung für ein Leitelement auf, das mit einem Kontaktelement des äußeren Zellhalters einer äußersten Packebene elektrisch verbunden ist.

Gemäß einer Ausführung, insbesondere mit einer verhältnismäßig großen Anzahl von Energiespeicherzellen pro Packebene, sind mehrere Befestigungsgänge, insbesondere durch mehrere oder alle Packebenen, vorgesehen, um für alle Zellstapel und/oder Energiespeicherzellen eine zuverlässige Druckkraft zum elektrischen Verbinden sicherzustellen.

Um das Aufbringen einer ausreichenden Druckkraft für Zellstapel, die im Inneren einer Packebene angeordnet sind, sicherzustellen, verläuft gemäß einer Ausführung wenigstens ein Befestigungsgang zwischen wenigstens zwei Zellstapeln, insbesondere so, dass dieser Befestigungsgang und die ihn ausbildenden Befestigungsausnehmungen in wenigstens einer der Packebenen weiter von einer äußeren Begrenzung der Energiespeichervorrichtung entfernt angeordnet ist, als wenigstens eine Energiespeicherzelle dieser Packebene. In einer solchen Ausführung kann beispielsweise eine Mehrzahl von Befestigungsgängen mit jeweils einem Befestigungsmittel in im Wesentlichen gleichen Abständen durch eine Packfläche einer Packebene verlaufen, wodurch eine im Wesentlichen gleiche Druckkraft auf alle Zellstapel dieser Packebene ausgeübt werden kann.

Insbesondere um eine elektrische Parallelschaltung mehrerer Zellstapel zu ermöglichen, sind gemäß einer Ausführung die Kontaktelemente mehrerer Zellstapel zwischen zwei benachbarten Packebenen miteinander elektrisch zu einer Kontaktelementgruppe verbunden. Vorzugsweise wird dabei mittels der Kontaktelementgruppe eine parallel geschaltete Zellstapelgruppe ausgebildet.

Um eine elektrische Parallelschaltung mehrerer Zellen zu ermöglichen, können gemäß einer Ausführung auch die Kontaktelemente mehrerer Zellen in einer Packebene miteinander elektrisch zu einer Kontaktelementgruppe verbunden sein.

So kann beispielsweise über die Anzahl der Packebenen eines Zellstapels eine gewünschte Nennspannung der Energiespeichervorrichtung eingestellt werden, während über eine Anzahl mittels einer Kontaktelementegruppe zusammengeschalteter Zellstapel bzw. Zellen eine gewünschte Nennkapazität der Energiespeichervorrichtung eingestellt werden kann.

Gemäß einer Ausführung ist an einem Kontaktelement und/oder an einer Kontaktelementgruppe wenigstens eine Kontaktlasche zur Verbindung mit einem Batterie-Managementsystem (BMS), einem Sensor und/oder einem anderen Kontaktelement angeordnet. Wenn eine solche Kontaktlasche am Rand eines Kontaktelements bzw. einer Kontaktelementgruppe angeordnet ist, kann dies die Anwendung eines BMS, eines Sensors oder eines anderen Kontaktelements erleichtern.

In einer Ausführung kann in wenigstens einem Befestigungsgang anstatt eines oder zusätzlich zu einem Befestigungsmittel ein Temperatursensor angeordnet sein, insbesondere um die Temperatur im Inneren der Energiespeichervorrichtung zu messen.

Um auf unterschiedliche Anforderungen wie die zwischen den Energiespeicherzellen aufzubringende Druckkraft, die Geometrie der Einbau-Umgebung und/oder Montage-Randbedingungen Rücksicht nehmen zu können, weist das Befestigungsmittel in einer Ausführung eine Zugstrebe und/oder ein Zugseil auf.

Eine Zugstrebe kann beispielsweise im Sinne einer einfachen Fahrradspeiche aus einem metallischen Material und/oder aus einem, ggf. verstärkten, Kunststoffmaterial ausgebildet sein. Ein Zugseil kann beispielsweise aus einem Federstahl oder einem Kunststoff mit elastischer Eigenschaft ausgebildet sein und ggf. Verstärkungsfasern aufweisen.

Um auch bei hohen Stückzahlen eine kostengünstige Fertigung zu ermöglichen, ist gemäß einer Ausführung ein erster Zellhalter einer Packebene und ein diesem ersten Zellhalter zugewandter zweiter Zellhalter einer benachbarten Packebene einstückig miteinander zu einem beidseitigen Zellhalter verbunden, wobei zwischen den beiden Seiten des beidseitigen Zellhalters das wenigstens eine Kontaktelement angeordnet ist.

Damit die Zellstapel im Sinne der Erfindung zusammengespannt werden können (d.h. damit mittels des Befestigungsmittels Druckkraft auf die einzelnen Energiespeicherzellen des Zellstapels ausgeübt werden kann), kann es notwendig sein, die Position der Energiespeicherzellen in ihrer Packebene festzulegen und/oder die Position korrespondierender Energiespeicherzellen unterschiedlicher Packebenen aufeinander auszurichten, insbesondere im Sinne einer koaxialen Ausrichtung. Dazu weisen gemäß einer Ausführung die Zellhalter einer Packebene für jede ihnen zugeordnete Energiespeicherzelle eine Zellaufnahme an einer Zellaufnahmeseite auf, wobei die Zellaufnahmeseite eines ersten Zellhalters derjenigen eines zweiten Zellhalters zugewandt ist, insbesondere so, dass eine Energiespeicherzelle an ihren zwei gegenüberliegenden Enden aufgenommen werden kann.

Insbesondere zur Anordnung eines Kontaktelements weisen die Zellhalter in einer Ausführung eine einer Zellaufnahmeseite abgewandte Kontaktseite auf, wobei die Kontaktseiten zueinander benachbart angeordneter Zellhalter benachbarter Packebenen jeweils eine der anderen Kontaktseite zugewandte Verbindungsfläche aufweisen. Die Verbindungsfläche ist insbesondere auch dafür vorgesehen, die zwischen benachbarten Energiespeicherzellen eines Zellenstapels anliegende Druckkraft auf das Kontaktelement zu übertragen und es damit, beispielsweise in einer zu einer Packebene parallelen Ebene festzulegen. Vorzugsweise ist nämlich zwischen den einander zugewandten Verbindungsflächen wenigstens ein Kontaktelement angeordnet.

Um die benachbarten Zellhalter zweier benachbarter Packebenen zuverlässig zueinander zu positionieren, sind gemäß einer Ausführung ein erster Zellhalter und ein benachbarter zweiter Zellhalter mittels eines Verbindungsvorsprungs an einem von diesem ersten oder diesem zweiten Zellhalter zueinander ausgerichtet, wobei sich der Verbindungsvorsprung aus der Verbindungsfläche dieses Zellhalters erstreckt und in der wenigstens einen Befestigungsausnehmung des benachbarten Zellhalters wenigstens teilweise aufgenommen ist. Durch die Ausrichtung der Zellhalter unterschiedlicher Packebenen zueinander kann eine koaxiale Ausrichtung des einen oder der mehreren Zellstapel hinsichtlich der Längsachse der Energiespeicherzellen des Zellstapels sichergestellt werden.

Wenn gemäß einer Ausführung der Verbindungsvorsprung mit einer durchgängigen Ausnehmung ausgeführt ist, insbesondere als Teil einer Befestigungsausnehmung, kann der Verbindungsvorsprung auch als Führung und/oder als Durchlass für ein Befestigungsmittel dienen.

Damit eine zuverlässige Positionierung aller Zellhalter der Energiespeichervorrichtung sichergestellt werden kann, ist gemäß einer Ausführung an jedem ersten und/oder an jedem zweiten Zellhalter wenigstens ein Verbindungsvorsprung angeordnet, vorzugsweise mit einer durchgängigen Ausnehmung. In einer Ausführung der Energiespeichervorrichtung kann es wünschenswert sein, die ersten und die zweiten Zellhalter aus einem Modell herstellen zu können, z.B. mittels eines Spritzgußverfahrens. Dazu sind in dieser Ausführung die Verbindungsvorsprünge an den ersten und/oder zweiten Zellhaltern jeweils einer Befestigungsausnehmung des benachbarten Zellhalters zugeordnet, die keinen Verbindungsvorsprung aufweist.

Um eine elektrische Isolierung zu erleichtern, ist die wenigstens eine Befestigungsausnehmung beabstandet von den Zellausnehmungen und/oder dem Kontaktelement angeordnet. Dies ermöglicht beispielsweise die Verwendung eines stromleitenden Materials für das Befestigungsmittel, weil ein Kontakt zwischen dem Befestigungsmittel und den Zellausnehmungen und/oder dem Kontaktelement von vorneherein ausgeschlossen ist.

Gemäß einer Ausführung sind mehrere Befestigungsausnehmungen nach einem vorbestimmten Muster zwischen den Zellausnehmungen angeordnet, insbesondere in regelmäßigen Abständen, vorzugsweise in Umfangsrichtung, auf einem gedachten Kreis um eine Zellaufnahme. Eine solche Gestaltung ermöglicht die Verwendung weniger oder eines einzigen "Basis"-Zellaufnehmers für ganz unterschiedliche Geometrien einer Energiespeichervorrichtung, und spart so Kosten für Entwurf und Fertigung der Zellaufnehmer.

Um eine einfache Gestaltung des Kontaktelements zu ermöglichen, weist dieses ein leitendes Metallblech auf, insbesondere mit einem Eisen-, Messing-, Kuper- und/oder Aluminium-Wirkstoff.

Gemäß einer Ausführung ist das Kontaktelement derart geformt, dass es an wenigstens einem und/oder um wenigstens einen Verbindungsvorsprung positioniert werden kann. Dadurch kann eine genaue Ausrichtung des Kontaktelements an einem Zellhalter sichergestellt werden. Beispielsweise kann das Kontaktelement wenigstens eine Ausnehmung aufweisen, an der es auf den Verbindungsvorsprung gesteckt werden kann.

Um die Ausbildung der Zellstapel zu erleichtern, sind die korrespondierenden Energiespeicherzellen in einer Ausführung wenigstens im Wesentlichen koaxial bezogen auf eine zu den Packebenen senkrecht verlaufende Längsachse der Energiespeicherzellen angeordnet.

Um eine möglichst Bauraum sparende Energiespeichervorrichtung, insbesondere mit einer möglichst hohen Energiedichte, zu ermöglichen, sind die Längsachsen der Befestigungsgänge und der Energiespeicherzellen im Wesentlichen parallel zueinander angeordnet. Ebenfalls zur Bauraumoptimierung sind gemäß einer Ausführung die Energiespeicherzellen in ihrer Packebene hexagonal oder matrixförmig nebeneinander angeordnet.

Um auf weitverbreitete und damit kostengünstige Standard-Energiespeicherzellen zurückgreifen zu können, weisen die Energiespeicherzellen eine wenigstens im Wesentlichen zylindrische Form auf. Vorzugsweise wird in einer Energiespeichervorrichtung nur ein Typ von Energiespeicherzellen verbaut, insbesondere vom Typ 18650. Aber auch andere gängige, insbesondere zylinderförmige, Typen von Energiespeicherzellen sind im Sinne der Erfindung verwendbar.

Gemäß einer bevorzugten Ausführung wird ein Zellhalter für mehrere Energiespeicherzellen zur Verwendung in einer Energiespeichervorrichtung nach einer Ausführung der Erfindung vorgeschlagen.

Der Zellhalter weist in dieser Ausführung eine Kontaktseite mit einer Verbindungsfläche und eine der Kontaktseite abgewandte Zellaufnahmeseite, an welcher mehrere Zellaufnahmen angeordnet sind, auf.

Bei dem Zellhalter erstreckt sich in dieser Ausführung ausgehend von der Verbindungsfläche wenigstens ein Verbindungsvorsprung weg von der Zellaufnahmeseite und wenigstens eine Verbindungsausnehmung hin zu der Zellaufnahmeseite.

Der wenigstens eine Verbindungsvorsprung und die wenigstens eine Verbindungsausnehmung weisen jeweils eine durchgängige Befestigungsausnehmung auf, welche sich in dieser Ausführung zwischen der Kontaktseite und der Zellaufnahmeseite durch den Zellhalter, insbesondere hindurch, erstreckt.

Diese Gestaltung ermöglicht insbesondere bei geeigneter Anordnung der Verbindungsausnehmung und des Verbindungsvorsprungs zueinander eine einfache Festlegung zweier Zellhalter an ihren Kontaktseiten. Zudem kann eine Energiespeichervorrichtung mit nur einem Typ Zellhalter ausgestaltet werden, was für erhebliche Kosteneinsparungen sorgt. Vorteilhafte Ausgestaltungen der Erfindung ergeben sich aus den Unteransprüchen; beispielhafte Ausführungen sind nachfolgenden Beschreibungen im Zusammenhang mit den Figuren zu entnehmen. Die Figuren zeigen im Einzelnen:
- Fig. 1: in einer Schnittansicht einen Ausschnitt einer Energiespeichervorrichtung nach einer Ausführung der Erfindung mit Energiespeicherzellen in drei Packebenen und mit zwei durchgängigen Befestigungsmitteln;
- Fig. 2: in einer oberen perspektivischen Ansicht einen Zellhalter einer Energiespeichervorrichtung gemäß einer Ausführung der Erfindung;
- Fig. 3: den Zellhalter aus Fig. 2 in einer unteren perspektivischen Ansicht;
- Fig. 4: ein Kontaktelement zur Verwendung in einer Energiespeichervorrichtung gemäß einer Ausführung der Erfindung;
- Fig. 5: in einer perspektivischen Ansicht eine beispielhafte Anordnung von Energiespeicherzellen in einer Energiespeichervorrichtung gemäß einer Ausführung der Erfindung;
- Fig. 6: in einer perspektivischen Ansicht eine Energiespeichervorrichtung nach einer Ausführung der Erfindung mit einem einzelnen, zwischen zwei Packebenen angeordneten Kontaktelement;
- Fig. 7: in einer perspektivischen Ansicht eine Energiespeichervorrichtung nach einer Ausführung der Erfindung mit einem doppelten Kontaktelement zwischen zwei Packebenen;
- Fig. 8: in einer teilweise geschnittenen perspektivischen Ansicht eine Energiespeichervorrichtung nach einer Ausführung der Erfindung mit einer Abschlussplatte; und
- Fig. 9: in einer perspektivischen Ansicht eine Oberseite einer Energiespeichervorrichtung nach einer Ausführung der Erfindung mit einer Abschlussplatte.

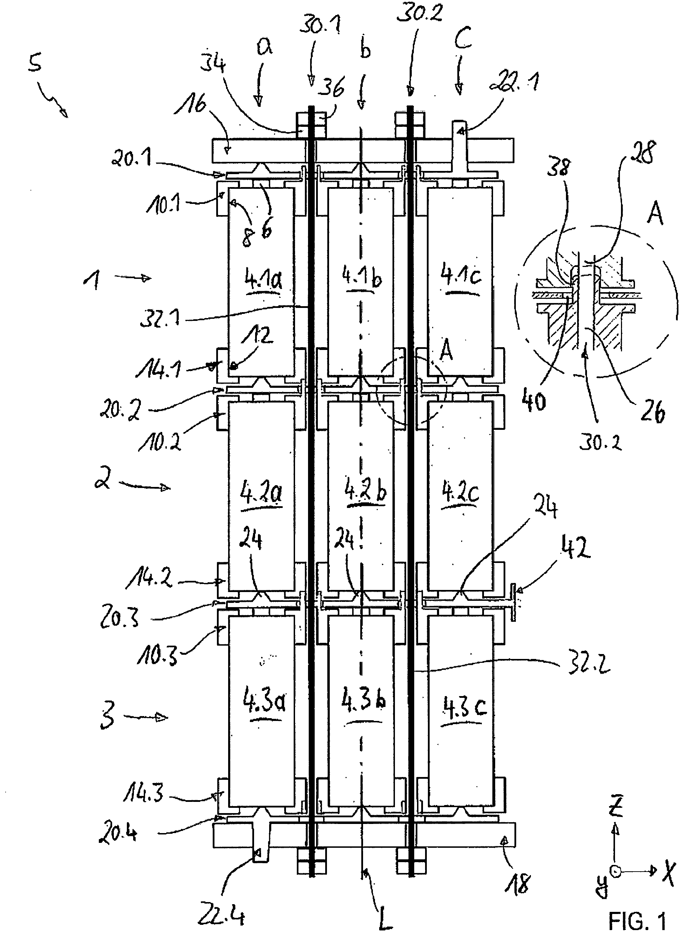

In Fig. 1 ist eine Energiespeichervorrichtung 5 mit drei Packebenen 1, 2, 3 dargestellt, in denen jeweils eine Mehrzahl von Energiespeicherzellen 4.1 a - c, 4.2 a - c und 4.3 a - c in einer matrixartigen Verteilung angeordnet ist. In Fig. 1 sind in x-Richtung (siehe Koordinatenangabe) in jeder der Packebenen 1,2 und 3 jeweils drei Energiespeicherzellen 4 angeordnet. Auch in y-Richtung ist jeweils eine Mehrzahl von nicht dargestellten Energiespeicherzellen angeordnet, sodass sich zusammen mit der Erstreckung in z-Richtung über drei Packebenen eine im Wesentlichen quaderförmige Bauform der Energiespeichervorrichtung 5 ergibt.

Die Energiespeicherzellen 4 jeder Packebene 1, 2 und 3 sind an ihrem oberen Ende mit dem hervorstehenden Batteriekontakt 6 jeweils in einer Zellaufnahme 8 eines ersten Zellhalters 10 aufgenommen. Das andere axiale Ende jeder Energiespeicherzellen 4 ist jeweils in einer Zellaufnahme 12 eines zweiten Zellhalters 14 aufgenommen.

Die Zellaufnahmen 8 des ersten Zellhalters 10 jeder Packebene 1, 2 und 3 sowie die Zellaufnahmen 12 des zweiten Zellhalters 14 jeder Packebene 1, 2 und 3 sind so ausgebildet, dass zueinander korrespondierende Energiespeicherzellen (hier z. B. 4.1 a, 4.2 a und 4.3 a, desgleichen mit b oder c) bezüglich einer Mittel-Längsachse L koaxial zueinander angeordnet sind.

In der Darstellung der Fig. 1 oberhalb der ersten Packebene 1 ist die Energiespeichervorrichtung mittels einer oberen Abschlussplatte 16 abgeschlossen; unterhalb der Packebene 3 durch eine untere Abschlussplatte 18. Beide Abschlussplatten 16 und 18 sind elektrisch isolierend ausgebildet und weisen in diesem Ausführungsbeispiel einen Faserverbund-Werkstoff auf. Die Abschlussplatten weisen eine materialspezifisch ausreichende Stärke auf, um zumindest bei makroskopischer Betrachtungsweise auch bei typischer Kraftbeaufschlagung durch Befestigungsmittel im Wesentlichen starr und/oder steif zu bleiben. In einem nicht dargestellten Ausführungsbeispiel weisen die die Abschlussplatten 16 und 18einen leitenden Werkstoff auf und sind elektrisch von den Zellen isoliert. In einer vorteilhaften Ausführung können die Abschlussplatten und die letzten Kontaktelemente integral als ein Bauteil ausgebildet sein.

Zwischen der oberen Abschlussplatte 16 und den Energiespeicherzellen 4.1 der ersten Packebene 1 sowie zwischen den Packebenen 1 und 2, den Packebenen 2 und 3 und zwischen der Packebene 3 und der unteren Abschlussplatte 18 ist jeweils ein Kontaktelement 20 eingelegt, wobei die Kontaktelemente 20.2 und 20.3 dazu ausgebildet sind, die Energiespeicherzellen 4.x zueinander benachbarter Packebenen elektrisch miteinander zu verbinden. Die Kontaktelemente 20.1 und 20.4 sind dazu ausgelegt, die Energiespeicherzellen einer der äußeren Packebenen 1 und 3 mittels eines Leitelements 22.1 bzw. 22.4 mit einem elektrischen Anschluss außerhalb der Energiespeichervorrichtung 5 zu verbinden.

Die Kontaktelemente 20 weisen im Bereich der Mittel-Längsachse L der Zellstapel a, b und c (oder parallel dazu) jeweils an der Verbindungsstelle zwischen zwei Energiespeicherzellen verschiedener Packebenen eine Verdickung 24 oder eine Vertiefung (hier nicht dargestellt) auf, die die elektrische Verbindung unterstützt.

In x-Richtung zwischen den Zellstapeln a und b bzw. b und c weist jeder der einstückig ausgebildeten ersten Zellhalter 10.1, 10.2 und 10.3 sowie jeder der einstückig ausgebildeten zweiten Zellhalter 14.1, 14.2 und 14.3 eine Befestigungsausnehmung 26 bzw. 28 auf, die für eine bessere Erkennbarkeit im Detail A dargestellt ist. Alle Befestigungsausnehmungen 26, 28 zwischen dem ersten Zellstapel a und dem zweiten Zellstapel b sind in einer zur Achse L parallelen Achse koaxial angeordnet. Dies gilt analog auch für die Befestigungsausnehmungen 26 und 28 der unterschiedlichen Packebenen 1 - 3 zwischen dem zweiten Zellstapel b und dem dritten Zellstapel c. Auch in den Abschlussplatten 16 und 18 sind entsprechend koaxial Ausnehmungen vorgesehen.

Somit erstrecken sich in der Darstellung der Fig. 1 zwei jeweils durch koaxiale Befestigungsausnehmungen ausgebildete Befestigungsgänge 30.1 und 30.2 entlang der z-Richtung durch die gesamte Energiespeichervorrichtung 5, insbesondere auch durch die entsprechenden Befestigungsausnehmungen der Zellhalter 10.1 bis 10.3 und 14.1 bis 14.3.

Durch jeden der Befestigungsgänge 30.1 und 30.2 ist ein als Metallstrebe ausgebildetes Befestigungsmittel 32.1 bzw. 32.2 geführt, welches an beiden Enden ein Außengewinde aufweist. Mittels Muttern 34 und Kontermuttern 36, die auf jeder z-Seite der Energiespeichervorrichtung 5 auf das jeweilige Außengewinde des Befestigungsmittels aufgeschraubt werden, spannen die Befestigungsmittel 32 die Energiespeichervorrichtung 5 und damit insbesondere die Zellstapel a, b und c zusammen.

In dem Maße, in welchem die Befestigungsmittel 32 dabei unter Zugspannung gesetzt werden, steht die fertig montierte Energiespeichervorrichtung 5 unter einer korrespondierenden Druckspannung, die insbesondere von den Muttern 34 auf die Abschlussplatten 16 und 18 übertragen wird, und von diesen aus über die metallischen Kontaktelemente 20 auf die Batteriekontakte 6 und die gegenüberliegenden Batteriekontakte eines jeden Zellstapels. Dabei werden die durch die Befestigungsmittel 32 in die Abschlussplatten 16 und 18 eingebrachten Zugkräfte gleichmäßig als Druckkräfte auf die verschiedenen Zellstapel aufgebracht.

Damit ist zum einen der elektrische Kontakt zwischen den Energiespeicherzellen der einzelnen Packebenen jedes Zellstapels für mittels der Kontaktelemente 20 sichergestellt, weil eine ausreichende Druckkraft aufgebracht werden kann. Darüber hinaus jedoch sorgt die gemeinsame Verspannung der Zellstapel über die unterschiedlichen Packebenen der Energiespeichervorrichtung 5 für eine erhöhte mechanische Stabilität der Energiespeichervorrichtung gegen von außen auf die Energiespeichervorrichtung aufgebrachte Biegekräfte, Biegemomente, Scherkräfte, Schermomente und/oder Torsionsmomente.

Die Zellhalter 14.1 und 10.2 sowie 14.2 und 10.3 sind dabei mittels Verbindungs-Vorsprüngen 38 des beteiligten ersten Zellhalters 10.1 bzw. 10.3 in einer, ggf. verbreiterten und/oder elastischen, Befestigungsausnehmung 28 des beteiligten zweiten Zellhalters 14.1 bzw. 14.2 positioniert hinsichtlich einer Festlegung in x- und in y-Richtung.

Die Verbindungs-Vorsprünge 38 dienen zusätzlich einer groben Festlegung der Kontaktelemente 20, welche kreisförmige Ausnehmungen 40 aufweisen, mit denen sie bei der Montage um die Verbindungs-Vorsprünge 38 eingelegt werden.

Bei der Energiespeichervorrichtung 5 gemäß Fig. 1 ist exemplarisch eine sehr einfache Schaltung dargestellt, bei der (in der Darstellung) die drei Energiespeicherzellen jeder Packebene parallel zu einer Zellgruppe elektrisch verbunden sind, die mittels der zugehörigen Kontaktelemente 20 parallel geschalten werden. Die anderen Packebenen, die in analoger Weise parallel verschaltet sind, werden in Reihe dazu geschaltet, sodass eine Kontaktelementgruppe ausgebildet wird, welche der Energiespeichervorrichtung 5 die vergrößerte Kapazität der Parallelschaltung von drei Zellen und die vergrößerte Spannung der Reinschaltung von drei Packebenen verschafft.

Als Standard werden in diesem Ausführungsbeispiel zylindrische Zellen vom Typ 18650 verwendet. An dem Kontaktelement 20.3 ist rechts exemplarisch eine Kontaktlasche 42 angedeutet, die im Sinne der Erfindung auch an jeder oder an einigen Kontaktelementen vorgesehen sein kann und einem hier nicht dargestellten Anschluss eines Batteriemanagement-Systems und/oder eines Temperatur-, Strom- und/oder ähnlichen Sensors dienen kann.

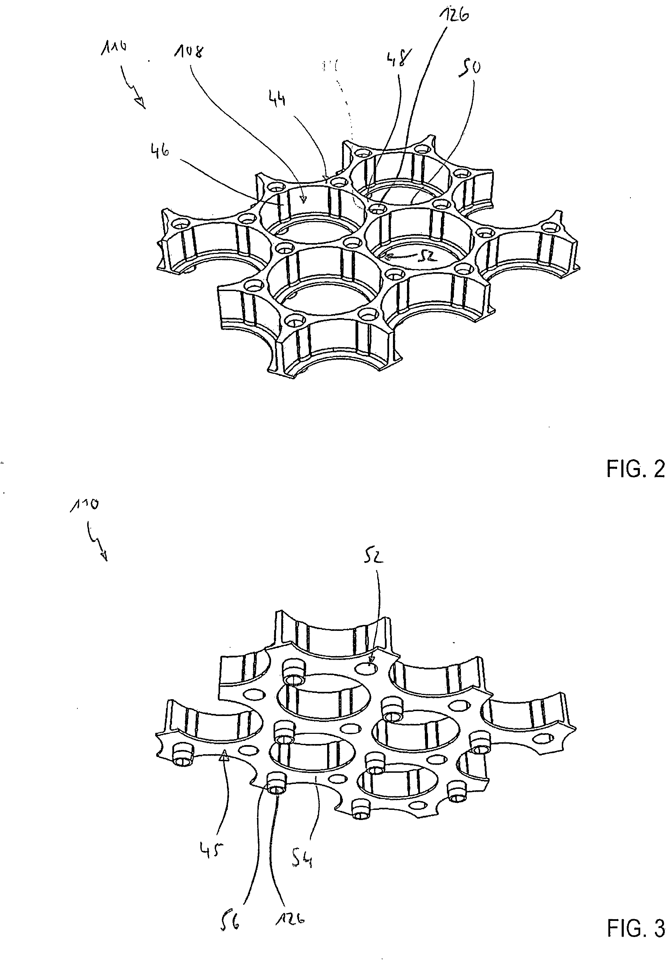

In Fig. 2 ist ein Zellhalter 110 für mehrere Energiespeicherzellen zur Verwendung in einer Energiespeichervorrichtung dargestellt. Der Zellhalter 110 weist eine Zellaufnahmeseite 44 auf, an welcher mehrere Zellaufnahmen 108 angeordnet sind. Die Zellaufnahmen 108 haben einen im Wesentlichen kreisförmigen Querschnitt zur Aufnahme jeweils einer zylinderförmigen Energiespeicherzelle, die hier nicht dargestellt ist. Zur verbesserten Festlegung in der Zellaufnahme 108 können kleine Ausbuchtungen 46 in jeder Zellenaufnahme vorgesehen sein.

Die einzelnen Zellenaufnahmen 108 sind in einem hexagonalen Muster angeordnet, sodass bei einer inneren Zellenaufnahme jeweils sechs weitere Zellenaufnahmen äquidistant auf einer gedachten Kreislinie um den Mittelpunkt der mittleren Zellenaufnahme 108 angeordnet sind. An den Knotenpunkten 48 der zwischen den Zellenaufnahmen verbleibenden Stege 50 ist jeweils eine Verbindungsausnehmung 52 ausgebildet (siehe Fig. 3), wobei jede der Verbindungsausnehmungen als Teil einer durchgängigen Befestigungsausnehmung 126 ausgebildet ist, welche sich zwischen der Zellaufnahmeseite 44 und einer aus Fig. 3 ersichtlichen Kontaktseite 45 durch den Zellhalter 110 erstreckt.

Aus Fig. 3 ist ersichtlich, dass die Kontaktseite 45 eine Verbindungsfläche 54 aufweist, von der ausgehend sich Verbindungsvorsprünge 56 weg von der Zellaufnahmeseite 44 und Verbindungsausnehmungen 52 hin zu der Zellaufnahmeseite 44 erstrecken.

Auch die Verbindungsvorsprünge 56 sind so ausgebildet, dass sie innen derart hohl sind, dass sie einen Teil der Befestigungsausnehmung 126 darstellen.

Die Verbindungsausnehmungen 52 sind derart aufgeweitet und/oder elastisch, dass sie einen Verbindungsvorsprung 56 eines zweiten, auch nach dieser Ausführung der Erfindung ausgebildeten Zellhalters 110 aufnehmen können. Durch die alternierende Ausbildung von Verbindungsvorsprüngen 56 und Verbindungsausnehmungen 52 in der in Fig. 2 und 3 gezeigten Ausführung kann damit eine Energiespeichervorrichtung mit identisch ausgebildeten ersten und zweiten Zellhaltern 120 bestückt werden, was für nennenswert günstigere Herstellungskosten und eine einfachere Montagelogistik sorgen kann.

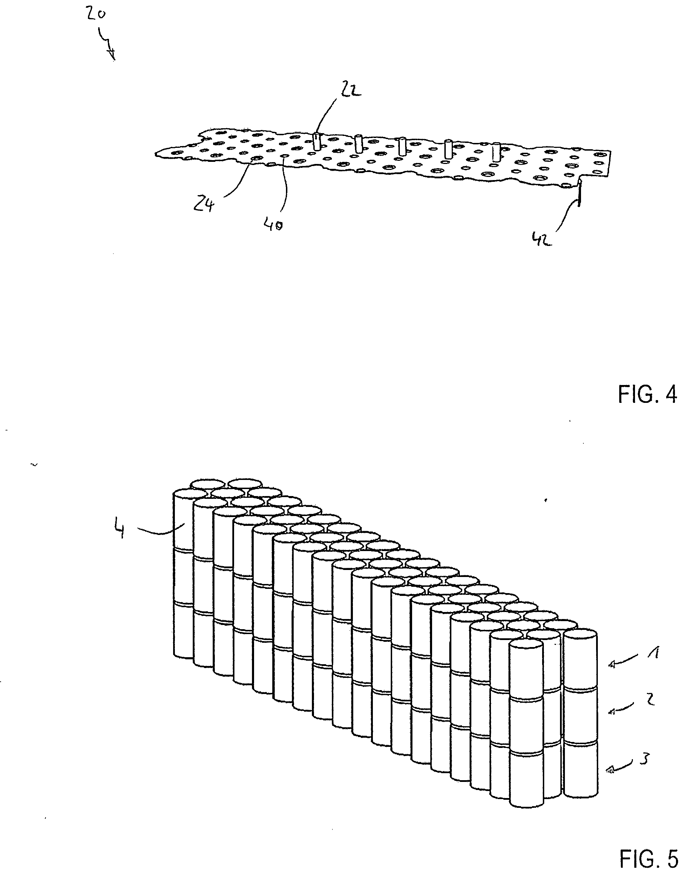

In Fig. 4 ist ein beispielhaftes Kontaktelement 20 nach einer Ausführung der Erfindung dargestellt. Es ist ersichtlich, dass kleinere Ausnehmungen 40 zur Positionierung des mit einem Metallblech ausgeführten Kontaktelements 20 an den Zellhaltern vorgesehen sind. Ebenso sind Verdickungen 24 zur Sicherstellung eines elektrischen Kontakts zwischen den korrespondierenden Energiespeicherzellen benachbarter Packebenen vorgesehen, zwischen die das Kontaktelement 20 eingelegt wird. Die Verdickungen 24 des Kontaktelements 20 sind hier durch eine Verformung des Metallblechs aus dessen Hauptebene heraus ausgebildet. An dem Kontaktelement 20 sind ferner Leitelemente 22 und eine Kontaktlasche 42 vorgesehen.

Die vereinfacht schematische Darstellung einer hexagonalen Anordnung zylindrischer Energiespeicherzellen 4 in drei Packebenen 1, 2 und 3 gemäß Fig. 5 soll insbesondere die Anordnung der Energiespeicherzellen 4 einer zugehörigen Energiespeichervorrichtung, beispielsweise mit Zellhaltern 110 gemäß den Fig. 2 und 3 und/oder mit einem oder mehreren Kontaktelementen 20 gemäß Fig. 4 pro Übergang zwischen benachbarten Packebenen 1 und 2 bzw. 2 und 3, darstellen.

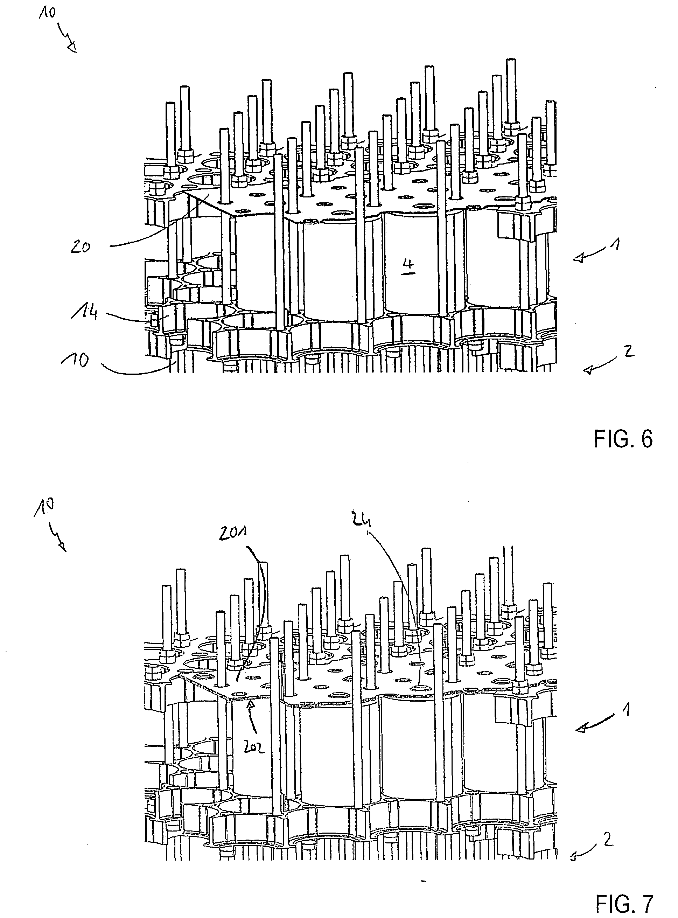

In Fig. 6 ist eine Energiespeichervorrichtung 5 in einem teilweise geschnitten dargestellten Ausschnitt gezeigt, wobei ersichtlich ist, dass in jeder Packebene 1 und zumindest 2 eine Vielzahl an Energiespeicherzellen 4 in hexagonaler Anordnung verbaut ist. Zwischen dem zweiten Zellhalter 14 der ersten Packebene 1 und dem ersten Zellhalter 10 der Packebene 2 ist ebenso wie zur oberen Kontaktierung der Energiespeicherzellen 4 der Packebene 1 ein einzelnes Kontaktelement 20 angeordnet, welches die Verbindung zwischen den Packebenen bzw. zwischen der obersten Packebene 1 und einem elektrischen Anschluss sicherstellen soll.

Im Gegensatz dazu ist in der Energiespeichervorrichtung 5 gemäß Fig. 7 zwischen den Packebenen 1 und 2 sowie zum oberen elektrischen Verbinden der Packebene 1 ein doppeltes Kontaktelement 201 und 202 verbaut, was die Fertigung der einzelnen Kontaktelemente 201 und 202 vereinfacht. Die Verdickungen 24 müssen nur noch in eine Richtung in das Grundblech eingebracht werden.

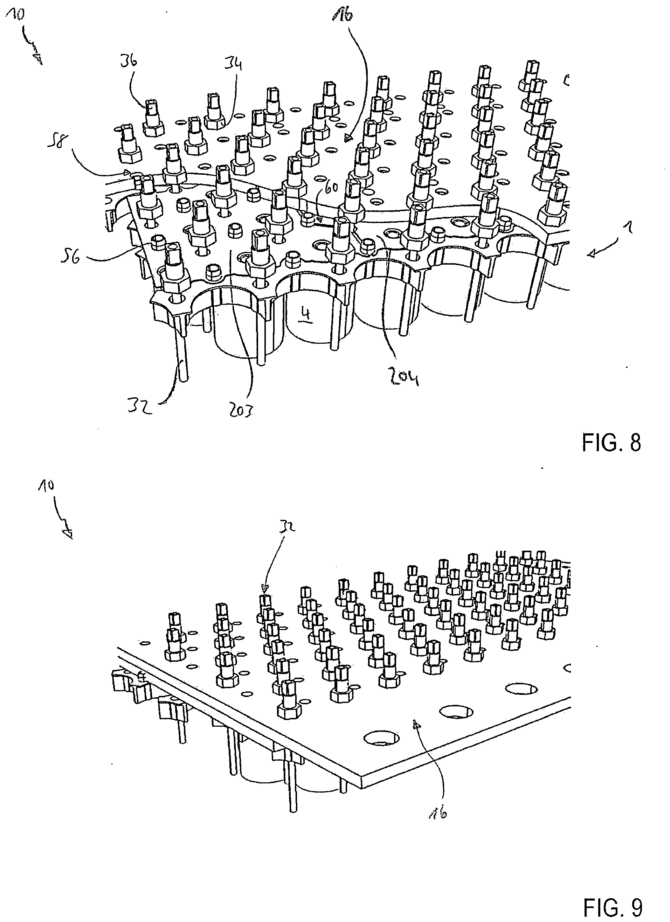

In Fig. 8 ist eine Energiespeichervorrichtung 5 mit einer teilweise geschnittenen Abschlussplatte 16 dargestellt. Daraus ist ersichtlich, wie die Befestigungsmittel 32 oberhalb der Abschlussplatte 16 mit Speichennippeln 34, 36 befestigt werden, wobei gleichzeitig eine Zugspannung durch das Verschrauben aufgebracht wird. Ebenso ist ersichtlich, dass auch die Abschlussplatte 16 Ausnehmungen 58 zur Aufnahme eines Verbindungsvorsprungs 56 aufweist, was unter anderem auch der Positionierung der Abschlussplatte dient.

Aus Fig. 8 ist auch ersichtlich, dass in einer Energiespeichervorrichtung 5 die Energiespeicherzellen 4 einer Packebene 1 mit getrennten Kontaktelementen 203 und 204 kontaktiert werden können, die an der mit den Bezugszeichen 60 bezeichneten Stelle voneinander beabstandet und damit nicht elektrisch verbunden sind. Dadurch können komplexere Schaltungen in der Energiespeichervorrichtung realisiert werden, bei welchen beispielsweise ein Spannungsaufbau zuerst in die eine Richtung über mehrere Packebenen und dann in die andere Richtung der Energiespeichervorrichtung über mehrere Packebenen erfolgt, entsprechende Verschaltung vorausgesetzt.

In Fig. 9 ist eine obere Ansicht einer Abschlussplatte 16 mit einer Vielzahl von Befestigungsmitteln 32 dargestellt.

## Patentansprüche

1. Energiespeichervorrichtung (5), bei welcher in wenigstens zwei Packebenen (1, 2, 3) jeweils eine Mehrzahl von Energiespeicherzellen (4) zwischen einem ersten Zellhalter (10, 110) und einem zweiten Zellhalter (14) der jeweiligen Packebene angeordnet sind, wobei
- wenigstens eine der Energiespeicherzellen einer der Packebenen mittels wenigstens eines Kontaktelements (20), das zwischen den einander zugewandten Zellhaltern benachbarter Packebenen angeordnet ist, mit einer korrespondierenden Energiespeicherzelle wenigstens einer benachbarten Packebene elektrisch zu einem Zellstapel verbunden ist,
- die Energiespeichervorrichtung oberhalb und/oder unterhalb der Zellstapel eine Abschlussplatte (16, 18) aufweist,
- die ersten Zellhalter und die zweiten Zellhalter der wenigstens zwei Packebenen jeweils mehrere durchgängige Befestigungsausnehmungen (26, 28) aufweisen,
- sich durch die Befestigungsausnehmungen dieser Zellhalter hindurch jeweils ein unter Zug stehendes Befestigungsmittel (32) erstreckt, mittels welchem wenigstens die Energiespeicherzellen des wenigstens einen Zellstapels (a, b, c) zusammengespannt sind,
- eine Zugkraft der Befestigungsmittel wenigstens mittelbar mittels der oberen und/oder unteren Abschlussplatte, an welcher die Befestigungsmittel festgelegt sind, auf die Zellstapel aufgebracht ist,
**dadurch gekennzeichnet, dass**
wenigstens ein Teil der Befestigungsausnehmungen weiter von einer nächstliegenden äußeren Begrenzung der Energiespeichervorrichtung entfernt angeordnet sind als wenigstens eine Energiespeicherzelle, wobei mehrere Befestigungsausnehmungen nach einem vorbestimmten Muster in regelmäßigen Abständen auf einem gedachten Kreis um eine Zellaufnahme zwischen den Zellausnehmungen angeordnet sind.

2. Energiespeichervorrichtung gemäß Anspruch 1, wobei entlang einer gemeinsamen Längsachse jeweils einer der Befestigungsausnehmungen dieser Zellhalter ein Befestigungsgang ausgebildet ist.

3. Energiespeichervorrichtung gemäß einem der vorherigen Ansprüche, wobei ein Befestigungsgang durch alle Packebenen hindurch ausgebildet ist.

4. Energiespeichervorrichtung gemäß einem der vorherigen Ansprüche, welche an einem äußeren Zellhalter einer ersten Packebene und/oder einer letzten Packebene jeweils eine Abschlussplatte (16, 18) aufweist, an welcher das Befestigungsmittel festgelegt und/oder umgelenkt ist.

5. Energiespeichervorrichtung gemäß einem der vorherigen Ansprüche, wobei an einem Kontaktelement und/oder an einer Kontaktelementgruppe wenigstens eine Kontaktlasche (42) zur Verbindung mit einem BMS, einem Sensor und/oder einem anderen Kontaktelement angeordnet ist.

6. Energiespeichervorrichtung gemäß einem der vorherigen Ansprüche, wobei das Befestigungsmittel eine Zugstrebe und/oder ein Zugseil aufweist.

7. Energiespeichervorrichtung gemäß einem der vorherigen Ansprüche, wobei ein erster Zellhalter einer Packebene und ein diesem ersten Zellhalter zugewandter zweiter Zellhalter einer benachbarten Packebene einstückig miteinander zu einem beidseitigen Zellhalter verbunden sind, wobei zwischen den beiden Seiten des beidseitigen Zellhalters das wenigstens eine Kontaktelement angeordnet ist.

8. Energiespeichervorrichtung gemäß einem der vorherigen Ansprüche, wobei die Zellhalter einer Packebene für jede ihnen zugeordnete Energiespeicherzelle eine Zellaufnahme (8, 12) an einer Zellaufnahmeseite aufweisen, und wobei die Zellaufnahmeseite eines ersten Zellhalters derjenigen eines zweiten Zellhalters zugewandt ist.

9. Energiespeichervorrichtung gemäß einem der vorherigen Ansprüche, wobei ein erster Zellhalter und ein benachbarter zweiter Zellhalter mittels eines Verbindungsvorsprungs an einem der Zellhalter zueinander ausgerichtet sind, der sich aus der Verbindungsfläche des einen Zellhalters erstreckt und der in der wenigstens einen Befestigungsausnehmung des benachbarten Zellhalters wenigstens teilweise aufgenommen ist.

10. Energiespeichervorrichtung gemäß einem der vorherigen Ansprüche, wobei die wenigstens eine Befestigungsausnehmung beabstandet von den Zellausnehmungen und/oder dem Kontaktelement angeordnet ist.

11. Energiespeichervorrichtung gemäß einem der vorherigen Ansprüche, wobei das Kontaktelement derart geformt ist, dass es an wenigstens einem und/oder um wenigstens einen Verbindungsvorsprung positioniert werden kann.

12. Energiespeichervorrichtung gemäß einem der vorherigen Ansprüche, wobei die korrespondierenden Energiespeicherzellen wenigstens im Wesentlichen koaxial bezogen auf eine zu den Packebenen senkrecht verlaufende Längsachse der Energiespeicherzellen angeordnet sind.

13. Energiespeichervorrichtung gemäß einem der vorherigen Ansprüche, wobei die Längsachsen der Befestigungsgänge und der Energiespeicherzellen im Wesentlichen parallel sind.

## Claims

1. **Energy storage device** (5), in which in at least two packing levels (1, 2, 3) a plurality of energy storage cells (4) are respectively arranged between a first cell holder (10, 110) and a second cell holder (14) of the respective packing level, wherein
- at least one of the energy storage cells of one of the packing planes is electrically connected to a corresponding energy storage cell of at least one adjacent packing plane to form a cell stack by means of at least one contact element (20) which is arranged between the facing cell holders of adjacent packing planes,
- the energy storage device has a closing plate (16, 18) above and/or below the cell stacks,
- the first cell holders and the second cell holders of the at least two packing levels each have a plurality of continuous fastening recesses (26, 28),
- a respective fastening means (32) under tension extends through the fastening recesses of these cell holders, by means of which at least the energy storage cells of the at least one cell stack (a, b, c) are pulled together,
- a tractive force of the fasteners is applied to the cell stacks at least indirectly by means of the upper and/or lower end plate to which the fasteners are fixed,
**characterized in that**
at least a part of the fastening recesses are arranged further away from a nearest outer boundary of the energy storage device than at least one energy storage cell, wherein several fastening recesses are arranged according to a predetermined pattern at regular distances on an imaginary circle around a cell receiving portion between the cell recesses.

2. Energy storage device according to claim 1, wherein a fastening passage is formed along a common longitudinal axis of one of the fastening recesses of each of these cell holders.

3. Energy storage device according to one of the previous claims, wherein a fastening passage is formed through all packing planes.

4. Energy storage device according to one of the previous claims, which has a respective end plate (16, 18) on an outer cell holder of a first packing plane and/or a last packing plane, on which end plate the fastening means is attached and/or deflected.

5. Energy storage device according to one of the previous claims, wherein at least one contact lug (42) for connection to a BMS, a sensor and/or another contact element is arranged on a contact element and/or on a contact element group.

6. Energy storage device according to one of the previous claims, wherein the fastening means comprises a tension strut and/or a tension cable.

7. Energy storage device according to one of the previous claims, wherein a first cell holder of one packing plane and a second cell holder of an adjacent packing plane facing this first cell holder are integrally connected to form a two-sided cell holder, wherein the at least one contact element is arranged between the two sides of the two-sided cell holder.

8. Energy storage device according to one of the previous claims, wherein the cell holders of a packing plane have a cell receiving portion (8, 12) on a cell receiving side for each energy storage cell assigned to them, and wherein the cell receiving side of a first cell holder faces that of a second cell holder.

9. Energy storage device according to any of the foregoing claims, wherein a first cell holder and an adjacent second cell holder are aligned with each other by means of a connecting protrusion on one of the cell holders, which protrusion extends from the connecting surface of the one cell holder and which is at least partially received in the at least one mounting recess of the adjacent cell holder.

10. Energy storage device according to any of the foregoing claims, wherein the at least one fastening recess is spaced apart from the cell recesses and/or the contact element.

11. Energy storage device according to one of the previous claims, wherein the contact element is formed such that it can be positioned on and/or around at least one connection protrusion.

12. Energy storage device according to one of the previous claims, wherein the corresponding energy storage cells are arranged at least substantially coaxially with respect to a longitudinal axis of the energy storage cells extending orthogonally to the packing planes.

13. Energy storage device in accordance with one of the previous claims, wherein the longitudinal axes of the fastening passages and of the energy storage cells are substantially parallel.

## Revendications

1. **Dispositif de stockage d'énergie** (5), dans lequel une pluralité de cellules de stockage d'énergie (4) sont respectivement disposées dans au moins deux niveaux de rangement (1, 2, 3) entre un premier porte-cellules (10, 110) et un second porte-cellules (14) du niveau de rangement respectif, dans lequel
- au moins un des cellules de stockage d'énergie de l'un des niveaux de rangement est relié électriquement à un cellule de stockage d'énergie correspondant d'au moins un niveau de rangement adjacent pour former une pile d'éléments au moyen d'au moins un élément de contact (20) qui est disposé entre les porte-cellules en vis-à-vis des niveaux de rangement adjacents,
- le dispositif de stockage d'énergie comporte une plaque de fermeture (16, 18) au-dessus et/ou au-dessous des piles de cellules,
- les premiers porte-cellules et les seconds porte-cellules des au moins deux niveaux de rangement comportent chacun une pluralité de cavités de fixation traversantes (26, 28),
- un moyen de fixation (32) respectif sous tension s'étend à travers les cavités de fixation de ces porte-cellules, au moyen duquel au moins les cellules de stockage d'énergie de la pile de cellules (a, b, c) au nombre d'au moins une sont serrées ensemble,
- une force de traction des moyens de fixation est appliquée aux piles de cellules au moins indirectement par la plaque de fermeture supérieure et/ou inférieure à laquelle les attaches sont attachés,
**caractérisé en ce que**
au moins une partie des cavités de fixation est disposée plus loin d'une limite extérieure la plus proche du dispositif de stockage d'énergie qu'au moins une cellule de stockage d'énergie, dans lequel plusieurs cavités de fixation sont disposées selon un modèle prédéterminé à distance régulière sur un cercle imaginaire autour d'un récipient de cellule entre les cavités de cellule.

2. Dispositif de stockage d'énergie selon la revendication 1, dans lequel un passage de fixation est formé le long d'un axe longitudinal commun de l'un des cavités de fixation de chacun de ces porte-cellules.

3. Dispositif de stockage d'énergie selon l'une des revendications précédentes, dans lequel un passage de fixation est formé à travers tous les niveaux de rangement.

4. Dispositif de stockage d'énergie selon l'une des revendications précédentes, qui comporte une plaque de fermeture (16, 18) sur un porte-cellule extérieure d'un premier niveau de rangement et/ou d'un dernier niveau de rangement respectivement, sur laquelle le moyen de fixation est fixé et/ou dévié.

5. Dispositif de stockage d'énergie selon l'une des revendications précédentes, dans lequel au moins une patte de contact (42) pour la connexion à un BMS, un capteur et/ou un autre élément de contact est disposée sur un élément de contact et/ou sur un groupe d'éléments de contact.

6. Dispositif de stockage d'énergie selon l'une des revendications précédentes, dans lequel le moyen de fixation comporte un tirant et/ou un câble de traction.

7. Dispositif de stockage d'énergie selon l'une des revendications précédentes, dans lequel un premier porte-cellules d'un niveau de rangement et un deuxième porte-cellules d'un niveau de rangement adjacent faisant face à ce premier porte-cellules sont intégralement reliés l'un à l'autre pour former un porte-cellules bilatéral, dans lequel le au moins un élément de contact est disposé entre les deux côtés du porte-cellules bilatéral.

8. Dispositif de stockage d'énergie selon l'une des revendications précédentes, dans lequel les porte-cellules d'un niveau de rangement comportent un récipient à cellules (8, 12) sur un côté de réception de cellules pour chaque cellule de stockage d'énergie qui leur est attribuée, et dans lequel le côté de réception de cellules d'un premier porte-cellules fait face à celui d'un second porte-cellules.

9. Dispositif de stockage d'énergie selon l'une des revendications précédentes, dans lequel un premier porte-cellules et un second porte-cellules adjacent sont alignés l'un avec l'autre au moyen d'un épaulement de liaison sur l'un des porte-cellules qui s'étend depuis la surface de liaison du premier porte-cellules et qui est au moins partiellement reçue dans le au moins un cavité de fixation du porte-cellules adjacent.

10. Dispositif de stockage d'énergie selon l'une des revendications précédentes, dans lequel le au moins un cavité de fixation est espacé des cavités de cellule et/ou de l'élément de contact.

11. Dispositif de stockage d'énergie selon l'une des revendications précédentes, dans lequel l'élément de contact est formé de telle sorte qu'il peut être positionné sur et/ou autour d'au moins un épaulement de connexion.

12. Dispositif de stockage d'énergie selon l'une des revendications précédentes, dans lequel les cellules de stockage d'énergie correspondantes sont disposées au moins principalement coaxialement par rapport à un axe longitudinal des cellules de stockage d'énergie s'étendant perpendiculairement aux niveaux de rangement.

13. Dispositif de stockage d'énergie selon l'une des revendications précédentes, dans lequel les axes longitudinaux des passages de fixation et des cellules de stockage d'énergie sont principalement parallèles.
